# FASCICULE DE BREVET EUROPEEN

(11) **EP 3 413 701 B1**
(45) Date de publication et mention de la délivrance du brevet: **28.10.2020**
(21) Numéro de dépôt: 16709096.8
(22) Date de dépôt: 10.02.2016
(51) Int. Cl.: A01G 20/20, A01G 24/46

(54) **PROCÉDÉ DE RÉALISATION D'UNE SURFACE ENGAZONNÉE ET SURFACE ENGAZONNÉE OBTENUE PAR LA MISE EN OEUVRE DUDIT PROCÉDÉ**
VERFAHREN ZUR ERZEUGUNG EINER GRASOBERFLÄCHE UND DURCH IMPLEMENTIERUNG DIESES VERFAHRENS ERHALTENE GRASOBERFLÄCHE
METHOD FOR CREATING A GRASSY SURFACE, AND GRASSY SURFACE OBTAINED BY IMPLEMENTING SAID METHOD

(43) Date de publication de la demande: 19.12.2018
(73) Titulaire: Chevalier, François, 90400 Meroux (FR)
(72) Inventeur: Chevalier, François, 90400 Meroux (FR)
(74) Mandataire: Cabinet Bleger-Rhein-Poupon
(86) Numéro de dépôt international: PCT/FR2016/050303
(87) Numéro de publication internationale: WO 2017/137670

(56) Documents cités:
- WO-A1-96/32540
- DE-A1- 2 444 436
- FR-A1- 3 024 815
- US-B1- 6 694 670

## Description

La présente invention a pour objet un procédé de réalisation d'une surface engazonnée sur un support de nature quelconque, ainsi qu'une surface engazonnée ainsi obtenue. Un exemple de l'état de la technique est décrit dans le document US 6,694,670 B1.

Le fait d'engazonner une zone représente à l'heure actuelle aussi bien pour les collectivités que pour les particuliers une solution fréquemment appliquée car elle est adaptée à de très nombreux usages.

Ainsi, une pelouse peut servir notamment de zone de détente ou d'ornement, de terrain de sport, ou d'une couverture de protection du sol, par exemple pour retenir l'humidité ou éviter les phénomènes d'érosion.

Suivant le mélange de graines employées, la surface engazonnée peut également jouer un rôle environnemental intéressant, en permettant le développement de certaines plantes, notamment mellifères, propices à l'épanouissement de nombreux insectes, voire à la réintroduction d'une faune en voie de disparition.

Le procédé classiquement mis en œuvre pour réaliser une surface engazonnée consiste à semer un mélange de graines dans une terre préalablement débarrassée des mauvaises herbes et des éventuels cailloux, ameublie et suffisamment fertile pour permettre la germination, l'enracinement puis le développement des graminées utilisées.

Ce procédé n'est néanmoins pas adapté à l'engazonnement de certains terrains de nature ingrate, tels que notamment ceux envahis de rocaille, ni ceux recouverts de béton, de bitume ou d'un autre revêtement synthétique, ne permettant pas l'enracinement d'une plante.

Des solutions alternatives ont été proposées pour recouvrir d'herbe ou de gazon ce type de terrains. Cependant, à l'heure actuelle celles-ci ne donnent pas entière satisfaction.

Ainsi, une solution consiste par exemple à installer des dalles alvéolées, en béton ou en matériau synthétique, aptes à accueillir un substrat de culture adapté au développement de gazon. Cependant, les dalles alvéolées se révèlent onéreuses et ne sont généralement pas employées sur des surfaces importantes. De plus, la zone engazonnée ainsi obtenue n'est pas adaptée à n'importe quel usage, du fait de la présence des dalles alvéolées qui lui confèrent une certaine dureté et demeurent souvent apparentes y compris lorsque l'herbe a poussé.

Par ailleurs, il est également possible de recouvrir un sol de nature ingrate par un gazon en plaques. Néanmoins, cette solution est non seulement onéreuse, mais également fastidieuse car elle suppose un arrosage et un apport en éléments fertilisants quotidiens sous peine de voir le gazon dessécher et dépérir rapidement.

Il est également envisageable de recourir à un gazon artificiel pour engazonner des terrains de nature ingrate. Néanmoins, cette solution s'avère également insatisfaisante, car elle est onéreuse, peu esthétique, ne convient pas à toutes les applications du fait de sa fragilité, et n'est pas écologique.

La présente invention vise par conséquent à pallier ces différents inconvénients et propose de fournir un procédé de réalisation d'une surface engazonnée qui soit adapté à tout type de terrain y compris le plus ingrat ou recouvert par un revêtement de type béton ou bitume, tout en étant respectueux de l'environnement.

A cet effet, l'invention a pour objet un procédé de réalisation d'une surface engazonnée sur un support de nature quelconque dans lequel on recouvre ledit support d'un géotextile, on étale une épaisseur d'une couche de sable suffisante au développement de semences de gazon, on répartit uniformément des semences de gazon dans ladite couche de sable, on étale une épaisseur d'une couche de terreau suffisante au développement de semences de gazon, on répartit uniformément des semences de gazon dans ladite couche de terreau, on tasse la couche de terreau au moyen d'un rouleau, on maintient lesdites couches de sable et de terreau humides.

Selon une première variante de mise en œuvre du présent procédé, on utilise une couche de sable et une couche de terreau sensiblement de même épaisseur.

Il est également envisageable d'utiliser une couche de sable et une couche de terreau d'épaisseurs différentes.

Conformément au présent procédé, on utilise par ailleurs en tant que semences de gazon un mélange de différentes variétés de graminées.

Une caractéristique de l'invention est encore définie par le fait que l'on utilise un terreau préalablement enrichi en fertilisant.

Selon une autre caractéristique du présent procédé, l'on intègre un fertilisant audit terreau déjà ensemencé.

Avantageusement, le procédé selon l'invention prévoit encore que l'on utilise du sable dont la granulométrie est comprise entre 0,1 et 0,4 mm, de préférence 0,4.

La présente invention entend également proposer une surface engazonnée réalisée sur un support de nature quelconque au moyen du procédé tel que précédemment décrit, caractérisée en ce qu'elle comporte un géotextile recouvrant ledit support, une couche de sable d'une épaisseur suffisante pour permettre le développement de semences de gazon recouvrant ledit géotextile, et une couche de terreau d'une épaisseur suffisante pour permettre le développement de semences de gazon.

La surface engazonnée selon l'invention peut se caractériser en ce qu'elle comporte une couche de sable et une couche de terreau dont les épaisseurs sont soit sensiblement identiques soit différentes.

D'autre part, une autre caractéristique de la surface engazonnée selon l'invention consiste en ce que le sable de la couche de sable présente une granulométrie comprise 0,1 et 0,4 mm, de préférence 0,4.

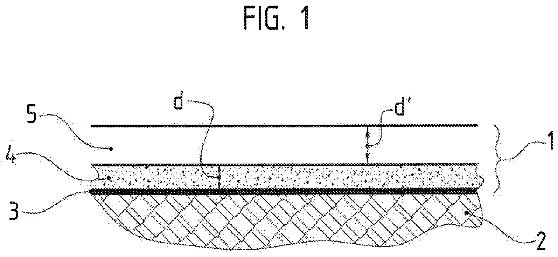

La présente invention sera mieux comprise à la lecture d'un exemple détaillé de réalisation en référence à la figure 1 annexée, fournie à titre d'exemple non limitatif, et correspondant à une vue en coupe d'une variante de réalisation d'une surface engazonnée obtenue par la mise en œuvre du procédé selon l'invention.

En référence à la figure 1, l'invention concerne un procédé de réalisation d'une surface engazonnée 1 sur un support 2 de nature quelconque, tel que notamment un terrain recouvert de béton, de bitume ou de rocailles empêchant de manière classique l'enracinement de toute végétation, y compris de graminées.

Par le biais de ce procédé, il est prévu de recouvrir le support 2 d'un géotextile 3, puis d'étaler sur le géotextile 3 une couche de sable 4 d'une épaisseur d suffisante au développement de semences de gazon, par exemple définies par un mélange de différentes variétés de graminées qui y sont réparties uniformément.

En fait, la couche de sable 4 est en outre de préférence constituée de sable présentant une granulométrie comprise 0,1 et 0,4 mm, de préférence 0,4. Cette caractéristique ainsi que le choix de son épaisseur d permet ainsi à la couche de sable 4 de préserver de manière optimale l'humidité nécessaire au développement des racines des différentes graminées du mélange de semences utilisé, tout en évitant toute stagnation intempestive d'eau grâce à son action drainante.

Une couche de terreau 5 d'une épaisseur d' suffisante au développement de semences de gazon est ensuite étalée sur la couche de sable 4, puis une nouvelle quantité de semences de gazon, définies par exemple par le même mélange de différentes variétés de graminées que celui utilisé pour ensemencer la couche de sable 4 ou par un mélange différent, est répartie uniformément dans la couche de terreau 5.

Afin d'optimiser le développement des graminées après leur germination, le procédé selon l'invention prévoit la possibilité d'utiliser du terreau 5 préalablement enrichi en fertilisant ou de rajouter à la couche de terreau 5 déjà étalée sur la couche de sable 4 un fertilisant de type classique, par exemple sous la forme de granulés, sous forme liquide ou toute autre type de fertilisant disponible sur le marché.

Dans l'exemple illustré à la figure 1, les couches de sable 4 et de terreau 5 présentent des épaisseurs d, d' différentes. Celles-ci sont en fait de préférence déterminées au cas par cas, en fonction de la nature du support 2 sur lequel il est prévu de réaliser la surface engazonnée 1 et éventuellement en fonction de la granulométrie du sable de la couche 4 et des besoins en eau et en éléments nutritifs des semences de graminées utilisées. Ainsi, il est bien entendu également possible d'utiliser des couches d'épaisseur d et d' sensiblement identiques.

Une fois ensemencée, la couche de terreau 5 est tassée, par exemple au moyen d'un rouleau, puis les couches de sable 4 et de terreau 5 sont maintenues humides jusqu'à ce que les graminées soient suffisamment enracinées pour continuer à prospérer grâce à l'eau contenue dans la couche de sable 4.

Il a été constaté que la mise en œuvre du procédé selon l'invention permet avantageusement d'obtenir une surface engazonnée sur tout type de support y compris le plus ingrat en moins d'une semaine, à condition bien entendu de disposer des conditions météorologiques favorables et/ou de maintenir la surface 1 sous une température et une humidité suffisante pour permettre la germination des graines puis leur développement.

Grâce à la présence du géotextile, on évite par ailleurs toute remontée intempestive de cailloux, de même que d'éventuels dégâts causés par la présence de taupes dans le sous-sol.

Bien entendu, de nombreuses modifications peuvent être apportées aux exemples décrits ci-dessus sans sortir du cadre de la présente invention défini par les revendications.

## Revendications

1. Procédé de réalisation d'une surface engazonnée (1) sur un support (2) de nature quelconque dans lequel on recouvre ledit support d'un géotextile (3), on étale une épaisseur (d) d'une couche de sable (4) suffisante au développement de semences de gazon, on répartit uniformément des semences de gazon dans ladite couche de sable (4), on étale une épaisseur (d') d'une couche de terreau (5) suffisante au développement de semences de gazon, on répartit uniformément des semences de gazon dans ladite couche de terreau (5), on tasse la couche de terreau (5), on maintient lesdites couches de sable (4) et de terreau (5) humides.

2. Procédé de réalisation d'une surface engazonnée (1) sur un support (2) de nature quelconque selon la revendication 1, **caractérisé en ce qu'**on utilise une couche de sable (4) et une couche de terreau (5) sensiblement de même épaisseur (d, d').

3. Procédé de réalisation d'une surface engazonnée (1) sur un support (2) de nature quelconque selon la revendication 1, **caractérisé en ce que** l'on utilise une couche de sable (4) et une couche de terreau (5) d'épaisseurs (d, d') différentes.

4. Procédé de réalisation d'une surface engazonnée (1) sur un support (2) de nature quelconque selon l'une des revendications précédentes, **caractérisé en ce que** l'on utilise en tant que semences de gazon un mélange de différentes variétés de graminées.

5. Procédé de réalisation d'une surface engazonnée sur un support de nature quelconque selon l'une des revendications précédentes, **caractérisé en ce que** l'on utilise un terreau (5) préalablement enrichi en fertilisant.

6. Procédé de réalisation d'une surface engazonnée (1) sur un support (2) de nature quelconque selon l'une des revendications 1 à 4, **caractérisé en ce que** l'on intègre un fertilisant audit terreau (5) déjà ensemencé.

7. Procédé de réalisation d'une surface engazonnée (1) sur un support de nature quelconque selon l'une des revendications 1 à 6, **caractérisé en ce que** l'on utilise du sable (4) dont la granulométrie est comprise 0,1 et 0,4 mm.

8. Surface engazonnée (1) réalisée sur un support (2) de nature quelconque au moyen du procédé selon l'une quelconque des revendications 1 à 7, **caractérisée en ce qu'**elle comporte un géotextile (3) recouvrant ledit support (2), une couche de sable (4) d'une épaisseur (d) suffisante pour permettre le développement de semences de gazon recouvrant ledit géotextile (3), et une couche de terreau (5) d'une épaisseur (d') suffisante pour permettre le développement de semences de gazon.

9. Surface engazonnée (1) selon la revendication 8, **caractérisée en ce qu'**elle comporte une couche de sable (4) et une couche de terreau (5) d'épaisseurs (d, d') sensiblement identiques ou différentes.

10. Surface engazonnée (1) selon l'une quelconque des revendications 8 ou 9, **caractérisée en ce que** le sable (4) de ladite couche de sable présente une granulométrie comprise 0,1 et 0,4 mm.

## Patentansprüche

1. Verfahren zur Herstellung einer Grasoberfläche (1) auf einem Träger (2) jeglicher Art, bei dem der besagte Träger mit einem Geotextil (3) bedeckt wird, eine für die Entwicklung von Grassamen ausreichende Dicke (d) einer Sandschicht (4) ausgebreitet wird, Grassamen gleichmäßig in der besagten Sandschicht (4) verteilt werden, eine für die Entwicklung von Grassamen ausreichende Dicke (d') einer Komposterdeschicht (5) ausgebreitet wird, Grassamen gleichmäßig in der besagten Komposterdeschicht (5) verteilt werden, die Komposterdeschicht (5) verdichtet wird, die besagten Sand- (4) und Komposterdeschichten (5) feucht gehalten werden.

2. Verfahren zur Herstellung einer Grasoberfläche (1) auf einem Träger (2) jeglicher Art nach Anspruch 1, **dadurch gekennzeichnet, dass** eine Sandschicht (4) und eine Komposterdeschicht (5) im wesentlichen gleicher Dicke (d, d') verwendet werden.

3. Verfahren zur Herstellung einer Grasoberfläche (1) auf einem Träger (2) jeglicher Art nach Anspruch 1, **dadurch gekennzeichnet, dass** eine Sandschicht (4) und eine Komposterdeschicht (5) unterschiedlicher Dicke (d, d') verwendet werden.

4. Verfahren zur Herstellung einer Grasoberfläche (1) auf einem Träger (2) jeglicher Art nach irgendeinem der vorhergehenden Ansprüche, **dadurch gekennzeichnet, dass** als Grassamen eine Mischung verschiedener Sorten von Gräsern verwendet wird.

5. Verfahren zur Herstellung einer Grasoberfläche auf einem Träger jeglicher Art nach irgendeinem der vorhergehenden Ansprüche, **dadurch gekennzeichnet, dass** eine zuvor mit Dünger angereicherte Komposterde (5) verwendet wird.

6. Verfahren zur Herstellung einer Grasoberfläche (1) auf einem Träger (2) jeglicher Art nach irgendeinem der Ansprüche 1 bis 4, **dadurch gekennzeichnet, dass** ein Dünger in die besagte bereits gesäte Komposterde (5) eingearbeitet wird.

7. Verfahren zur Herstellung einer Grasoberfläche (1) auf einem Träger jeglicher Art nach irgendeinem der Ansprüche 1 bis 6, **dadurch gekennzeichnet, dass** Sand (4) verwendet wird, dessen Teilchengröße zwischen 0,1 und 0,4 mm liegt.

8. Grasoberfläche (1), die mittels des Verfahrens nach irgendeinem der Ansprüche 1 bis 7 auf einem Träger (2) jeglicher Art hergestellt wird, **dadurch gekennzeichnet, dass** sie ein den besagten Träger (2) bedeckendes Geotextil (3), eine Sandschicht (4) ausreichender Dicke (d), um die Entwicklung von das besagte Geotextil (3) bedeckenden Grassamen zu ermöglichen, und eine Komposterdeschicht (5) ausreichender Dicke (d'), um die Entwicklung von Grassamen zu ermöglichen, umfasst.

9. Grasoberfläche (1) nach Anspruch 8, **dadurch gekennzeichnet, dass** sie eine Sandschicht (4) und eine Komposterdeschicht (5) im wesentlichen identischer oder unterschiedlicher Dicke (d, d') umfasst.

10. Grasoberfläche (1) nach irgendeinem der Ansprüche 8 oder 9, **dadurch gekennzeichnet, dass** der Sand (4) der besagten Sandschicht eine Teilchengröße zwischen 0,1 und 0,4 mm aufweist.

## Claims

1. Method for producing a lawn surface (1) on a support (2) of any kind, wherein said support is covered with a geotextile (3), a thickness (d) of a layer of sand (4) sufficient for the development of grass seeds is spread, grass seeds are uniformly distributed in said layer of sand (4), a thickness (d') of a layer of soil (5) sufficient for the development of the grass seeds is spread, grass seeds are uniformly distributed in said layer of soil (5), the layer of soil (5) is compacted, said layers of sand (4) and soil (5) are kept moist.

2. Method for producing a lawn surface (1) on a support (2) of any kind according to claim 1, wherein a layer of sand (4) and a layer of soil (5) substantially of the same thickness (d, d') are used.

3. Method for producing a lawn surface (1) on a support (2) of any kind according to claim 1, wherein a layer of sand (4) and a layer of soil (5) of different thicknesses (d, d') are used.

4. Method for producing a lawn surface (1) on a support (2) of any kind according to one of the preceding claims, wherein a mixture of different varieties of grasses is used as grass.

5. Method for producing a lawn surface on a support of any kind according to one of the preceding claims, wherein a soil (5) previously enriched with fertilizer is used.

6. Method for producing a lawn surface (1) on a support (2) of any kind according to one of claims 1 to 4, wherein a fertilizer is incorporated into said already sown soil (5).

7. Method for producing a lawn surface (1) on a support of any kind according to one of claims 1 to 6, wherein sand (4), the particle size of which is between 0.1 and 0.4 mm, is used.

8. Lawn surface (1) produced on a support (2) of any kind by means of the method according to any one of claims 1 to 7, wherein it includes a geotextile (3) covering said support (2), a layer of sand (4) with a thickness (d) sufficient to permit the development of grass seeds covering said geotextile (3), and a layer of soil (5) with a thickness (d') sufficient to permit the development of grass seeds.

9. Lawn surface (1) according to claim 8, wherein it includes a layer of sand (4) and a layer of soil (5) with a substantially identical or different thicknesses (d, d').

10. Lawn surface (1) according to any one of claims 8 or 9, wherein the sand (4) of said layer of sand has a particle size between 0.1 and 0.4 mm.
